# FASCICULE DE BREVET EUROPEEN

(11) **EP 0 423 026 B1**
(45) Date de publication et mention de la délivrance du brevet: **24.08.1994**
(21) Numéro de dépôt: 90402821.4
(22) Date de dépôt: 10.10.1990
(51) Int. Cl.: G01S 5/16, G01S 1/70

(54) **Procédé d'évaluation simultanée des positions relatives d'une pluralité de balises**
Verfahren zur simultanen Auswertung der relativen Positionen einer Vielzahl von Baken
Method for the simultaneous evaluation of the relative positions of a plurality of beacons

(30) Priorité: 10.10.1989 FR 8913180
(43) Date de publication de la demande: 17.04.1991
(73) Titulaire: MICROMAINE A.S.I., F-72650 La Milesse (FR)
(72) Inventeur: Brouant, Marc, F-72000 Le Mans (FR)
(74) Mandataire: Rodhain, Claude

(56) Documents cités:
- EP-A- 0 265 542
- EP-A- 0 267 181
- WO-A-83/02165
- WO-A-89/03075
- DE-A- 3 809 538
- FR-A- 2 399 033
- ENGINEERING, vol. 228, no. 8, septembre 1988, page 393, Londres, GB; "Design inpractice: AGV's gain their freedom"

## Description

Le domaine de l'invention est celui de la localisation et du repérage de machines ou objets mobiles, par des appareils d'observation destinés à fournir les coordonnées angulaires d'un ou plusieurs points de ces machines ou objets mobiles matérialisé par exemple, par un ou plusieurs émetteurs de signaux optiques appelés balises, les coordonnées angulaires étant évaluées par rapport à l'axe d'observation de l'appareil.

Plus spécifiquement, l'invention concerne un nouveau procédé d'évaluation simultané des positions relatives d'une pluralité de balises par rapport à un référentiel constitué par l'axe optique d'un dispositif d'observation, chaque balise émettrice émettant un signal optique du type impulsionnel codé temporellement et spécifique de la balise, ledit dispositif d'observation détectant dans son champ d'observation les signaux codés desdites balises émettrices pour fournir des donnés angulaires correspondant respectivement aux angles définis par le dispositif d'observation et les balises.

Le document PCT WO87/07009 divulgue un système de localisation de position pour un robot mobile qui inclut un détecteur multisecteur capable de détecter un signal codé émis par une balise placée à distance du robot. Ce système connu permet notamment de définir la position du robot mobile par rapport à une balise spécifique parmi un nombre de balises identifiables séparément en fournissant des données angulaires entre la balise observée et le robot.

Dans ce système, chaque balise est autonome. L'identification de la balise se fait par la détection des transitions du signal codé au moyen d'un circuit différentiateur. Chaque balise émet une séquence lumineuse toutes les 15,6 millisecondes. Chaque séquence lumineuse comprend une combinaison binaire d'impulsions de codage de façon à pouvoir identifier 128 balises différentes.

Cependant, dans ce système connu on procède à un repérage balise par balise du fait que le codage des signaux lumineux impose au détecteur de position d'observer une balise à la fois. Ainsi pour observer une pluralité de balises simultanément il est nécessaire de disposer d'une pluralité de détecteurs de position associés à une pluralité de balises.

Ce système connu ne permet donc pas une observation globale d'une pluralité de balises émettant dans le champ d'observation d'un seul détecteur de position.

Le brevet US-A-40 81 669 divulgue un système de reconnaissance pour un robot qui détecte une information codée sous forme de signal optique provenant d'une balise émettrice permettant au robot de reconnaître et d'identifier la source d'émission ou balise.

Le signal optique est décodé et est comparé avec une information mémorisée dans le robot pour fournir l'identification de la source émettrice. Le codage des signaux optiques émis par une source consiste à transmettre des impulsions de signaux optiques représentant les bits d'un mot de code correspondant à la représentation binaire d'un numéro d'identification de la source. Dans ce brevet, le système de reconnaissance ne peut détecter qu'une source à la fois.

Le procédé de codage des signaux optiques des sources et le dispositif d'observation divulgués dans ces deux documents ne sont pas adaptés pour l'évaluation simultanée des positions d'une pluralité de balises émettrices.

Dans ces systèmes connus, le repérage de plusieurs balises se fait donc successivement en dirigeant le dispositif d'observation ou capteur par le jeu d'un système mécanique ou électromécanique en direction de la balise à observer. L'inconvénient de l'utilisation de tels systèmes mécaniques réside essentiellement dans leur temps de réaction relativement lent par rapport au temps de détection d'une balise.

Par ailleurs, dans les dispositifs connus, les balises émettrices doivent être espacées d'une distance suffisante pour garantir qu'elles ne soient pas observées simultanément du fait des problèmes de brouillage des signaux, les balises fonctionnant de manière asynchrone. Ces dispositifs connus sont donc limités dans leur utilisation notamment au niveau de la largeur de champ d'observation du dispositif d'observation.

On connaît également, par l'article "Design in practice : AVG's gain their freedom", paru dans la revue ENGINEERING, volume 228, N° 8, septembre 1988, page 393, un procédé d'évaluation des positions relatives d'une pluralité de balises dans un système de localisation de balises dans lequel les balises codées émettent des impulsions lumineuses et un dispositif d'observation détecte l'impulsion d'une balise et fournit sa position angulaire.

En conséquence l'objectif de l'invention est de palier à ces différents inconvénients de la technique en proposant un nouveau procédé d'évaluation simultanée des positions relatives d'une pluralité de balises rapport à un référentiel constitué par l'axe optique d'un dispositif d'observation, chaque balise émettant un signal optique du type impulsionnel, codé temporellement et spécifique de la balise, ledit dispositif d'observation détectant dans son champ d'observation les signaux codés desdites balises émettrices pour fournir des données angulaires correspondant respectivement aux angles définis par le dispositif d'observation et les balises.

L'invention a donc pour objet un procédé d'évaluation des positions relatives d'une pluralité de balises dans un système de localisation de balises comprenant des balises codées émettant des impulsions lumineuses et un dispositif d'observation pour détecter un impulsion lumineuse d'une balise et fournir des données angulaires de positions de la balise par rapport au dispositif d'observation en réponse à ladite détection, caractérisé en ce qu'il comprend les étapes suivantes:
on fixe une période d'observation des balises comprenant un nombre prédéterminé de cycles de détection d'une impulsion lumineuse par le dispositif d'observation;
on synchronise les balises entre elles pour qu'elles émettent à tour de rôle, pendant la période d'observation, au moins deux impulsions lumineuses sur deux cycles de détection, de ladite periode d'observation en fonction d'une répartition temporelle préétablie des instants d'émission des impulsions lumineuses affectés à chaque balise;
on mémorise dans le dispositif d'observation ladite répartition temporelle pour associer à un cycle de détection une référence de balise particulière;
on initialise dans le dispositif d'observation une première base de temps comptant par cycle de détection à partir d'une première impulsion lumineuse détectée pour détecter l'occurrence des impulsions lumineuses pendant la période d'observation;
on mémorise à chaque impulsion détectée pendant la période d'observation, les données angulaires de la balise correspondant à ladite impulsion lumineuse par rapport au dispositif d'observation;
on affecte aux données angulaires mémorisées la référence de la balise particulière correspondant à ces données en associant l'ordre des occurences d'impulsions lumineuses détectées et ladite répartition temporelle mémorisée pour évaluer, pendant la période d'observation, la position des balises observées simultanément dans le champ d'observation du dispositif d'observation.

La répartition temporelle des impulsions de codage à l'intérieur d'une période de temps d'observation divisée en cycles de référence et combinée au synchronisme de l'émission des signaux des balises permet de faire émettre simultanément à l'intérieur de la période de temps d'observation une pluralité de balises sans craindre des phénomènes d'interférence de signaux. De cette manière, le dispositif d'observation peut observer la pluralité de balises sans s'orienter vers l'une ou l'autre des balises, puisqu'il ne reçoit qu'une impulsion de codage à la fois. Le dispositif d'observation est synchronisé sur les émissions optiques des balises, et par la première base de temps il contrôle le temps séparant les impulsions des balises. De cette manière, il est possible de contrôler si l'impulsion de lumière reçue par le dispositif d'observation correspond bien à un signal émis par une balise. A chaque détection d'une impulsion, le dispositif d'observation mesure des données angulaires correspondant à la position de la balise émettrice. L'association d'une balise identifiée avec les données angulaires lui correspondant est réalisée facilement dès lors que l'on connaît la répartition temporelle des impulsions détectées donnée par la base de temps.

Selon une autre caractéristiques de l'invention la répartition temporelle des impulsions des signaux optiques codés à l'intérieur d'une période de temps d'observation est telle que chaque signal optique du type impulsionnel est composé d'une séquence d'une durée égale à la période de temps d'observation, ladite séquence comprenant deux impulsions dont l'écart temporel à l'intérieur de la période de temps d'observation est caractéristique de la balise émettrice du signal, les impulsions de l'ensemble des signaux optiques codés émis par la pluralité de balises observées ne se recouvrant pas temporellement à l'intérieur d'une période de temps d'observation.

Selon encore une autre caractéristique de l'invention, l'étape de mémorisation des données angulaires comprend en outre
une étape de positionnement d'un élément d'information dans un emplacement d'un mot de contrôle courant comportant un nombre prédéterminé d'emplacements, parallèlement à la mémorisation d'une donnée angulaire mesurée, la position de l'emplacement dans le mot de contrôle étant déterminée par le numéro de comptage de cycles de référence de la première base de temps,
et dans lequel l'analyse de la répartition temporelle des impulsions de signaux codés à l'intérieur de la période de temps d'observation comprend
une recherche à l'identique du mot de contrôle courant dans une table de mots de contrôle préenregistrés, chaque mot de contrôle préenregistré étant associé à un mot d'identification de balises émettrices, l'association du mot d'identification de balises émettrices et de la succession de données angulaires mémorisées donnant pour chaque balise identifiée les données angulaires correspondantes mesurées pendant la période de temps d'observation.

Ainsi, à chaque impulsion de signal détectée par le dispositif d'observation, on détermine la position de la balise émettrice ce qui permet le suivi précis d'objets en mouvement rapide par exemple. Cependant la détermination de la balise émettrice et son association avec les données angulaires mesurées lui correspondant n'a lieu qu'à la fin de la période d'observation.

Selon encore une autre caractéristique de l'invention la répartition temporelle des impulsions des signaux optiques codés à l'intérieur d'une période de temps d'observation est telle que chaque signal optique du type impulsionnel est composé d'une séquence d'une durée égale à la période d'observation, ladite séquence comprenant deux impulsions de synchronisation suivies d'une troisième impulsion décalée temporellement des deux impulsions de synchronisation d'un intervalle de temps proportionnel à un numéro d'identification d'une balise.

Selon encore une autre caractéristique de l'invention l'étape de mémorisation des données angulaires comprend en outre
une étape d'initialisation d'une seconde base de temps comptant par cycle de référence, lors de la détection de la dernière impulsion de synchronisation des signaux codés émis par la pluralité de balises,
une étape de reconnaissance d'une impulsion décalée précédent la mémorisation d'une donnée angulaire mesurée et correspondant à l'occurrence d'un comptage de multiples de cycles de référence par la seconde base de temps
et dans lequel l'analyse de la répartition temporelle des impulsions de signaux codés à l'intérieur de la période de temps d'observation étant effectuées en associant le nombre multiple de cycle de référence écoulé entre la dernière impulsion de synchronisation et l'impulsion de signal décalée et le numéro d'identification prédéterminé de la balise émettrice de l'impulsion de signal décalée.

Grâce au fait que le décalage temporel de l'impulsion de codage par rapport aux impulsions de synchronisation est proportionnel à un numéro d'identification de balise, chaque balise émettrice d'une impulsion décalée est reconnue immédiatement par consultation de la seconde base de temps sans attendre l'échéance de la période d'observation.

Selon encore une autre caractéristique de l'invention, on compare les données angulaires mesurées pendant une période de temps d'observation et associées à une balise par rapport à une valeur d'écart prédéterminée.

De cette manière on vérifie que les impulsions lumineuses reçues correspondent bien à une configuration possible de la répartition temporelle des impulsions de codage.

Selon une autre caractéristique de l'invention on effectue le calcul de données angulaires moyennes à partir des données angulaires mesurées pendant la période de temps d'observation et associées à une balise.

De cette manière on obtient une position moyenne de chaque balise après chaque période de temps d'observation ce qui permet de suivre des balises animées d'un mouvement rapide.

D'autres caractéristiques et avantages de l'invention ressortiront mieux encore de la description qui va suivre concernant une forme de réalisation préférentielle de l'invention donnée à titre d'exemple non limitatif et illustrée sur les dessins ci-joints dans lesquels :
- la figure 1 représente de façon schématique un dispositif d'observation associé à une pluralité de balises,
- la figure 2 représente de façon schématique un dispositif d'observation de balises,
- la figure 3 représente un diagramme des temps concernant une première répartition temporelle des impulsions de signaux émis par les balises selon l'invention,
- la figure 4 représente un diagramme des temps concernant une seconde répartition temporelle des impulsions de signaux émis par les balises selon l'invention,
- la figure 5 représente un mot de contrôle, une liste de données angulaires et un mot d'identification de balises selon l'invention,
- la figure 6 représente une table de mots de contrôle associée à une table de mots d'identification de balises.

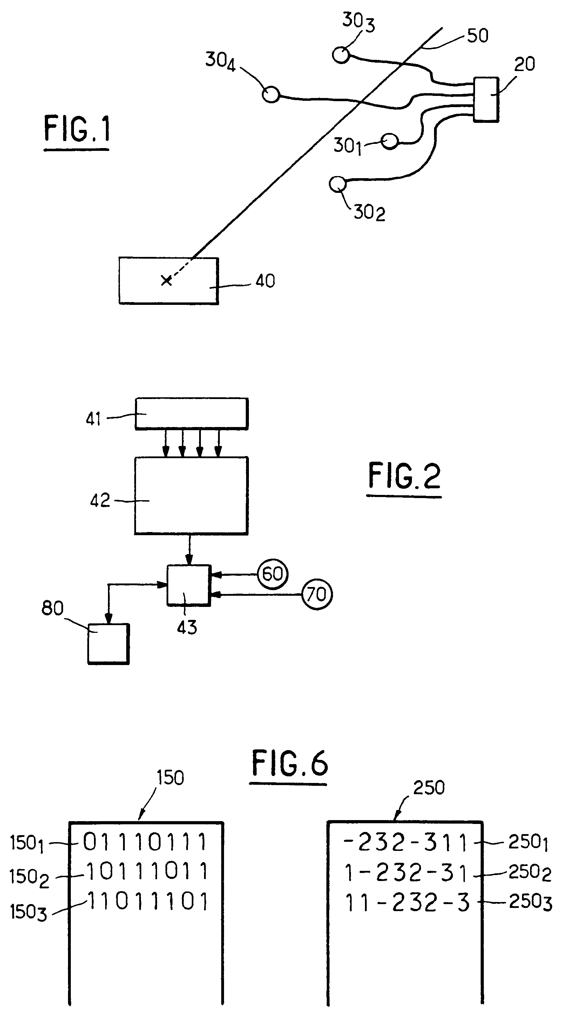

Comme visible sur la figure 1, le dispositif d'observation 40 est placé à distance d'une pluralité de balises 30, une balise pouvant représenter par exemple un point d'un objet ou l'objet lui-même. Chaque balise 30 émet un signal optique, par exemple un signal lumineux infrarouge de longueur d'onde prédéterminée (880 nm ou 940nm), l'émission lumineuse se faisant sous forme pulsée et codée par répartition temporelle des impulsions de signal lumineux, la répartition temporelle des impulsions lumineuses étant caractéristique de la balise, de l'objet ou de la partie de l'objet auquel elle est associée. De façon générale, selon l'invention, toute source capable d'émettre un signal détectable et décodable peut être utilisée avantageusement. Cependant dans la description, nous nous limiterons à un signal lumineux infrarouge couramment utilisé dans le domaine technique de l'invention.

Selon la figure 2, le dispositif d'observation 40 ou caméra est principalement composé d'une cellule de détection de position 41 reliée à un circuit électronique 42 chargé notamment du traitement des signaux électriques issus de la cellule 41. De façon connue, la cellule 41 se compose par exemple d'une surface de silicium photosensible ou tout autre matériau équivalent, coopérant avec des connecteurs de courant latéral (non représentés). La cellule de détection recevant un impact lumineux, par exemple une impulsion lumineuse, restitue quatre composantes de courant détectées respectivement par les quatre connecteurs, la valeur des composantes de courant étant proportionnelle à l'intensité lumineuse globale reçue et fonction de la position de l'impact lumineux sur la surface de silicium de la cellule 41.

Les circuits électroniques 42, à partir des composants de courant latéral mesurés déterminent par calcul des données angulaires de position de la source de l'impulsion lumineuse reçue par rapport au dispositif d'observation 40. Les données angulaires peuvent notamment correspondre à des données de site et d'azimut déterminées par rapport à l'axe optique 50 du dispositif d'observation assimilé à un référentiel. Pour le calcul des données angulaires, il est courant d'utiliser des moyens de calcul et de commande 43 reliés au circuit électronique 42, les moyens de calcul et de commande pouvant notamment être du type microprocesseur.

Selon l'invention, le dispositif d'observation 40 observe simultanément une pluralité de balises, c'est-à-dire qu'il reçoit pendant une période de temps d'observation prédéterminée, une pluralité de signaux infrarouges provenant respectivement d'une pluralité de balises émettrices. Pour ce faire, l'invention prévoit que les signaux optiques émis par les balises 30 sont du type signaux impulsionnels, les impulsions étant réparties temporellement dans la période de temps d'observation, et les balises 30 étant synchronisées entre elles de manière à éviter tout phénomène de recouvrement de signaux entre les balises émettrices.

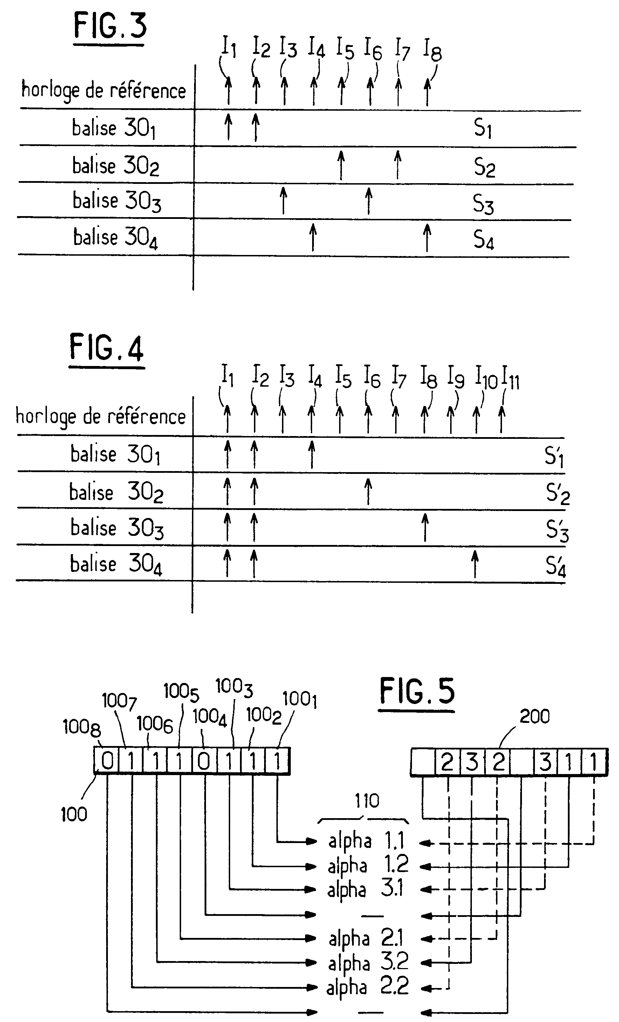

La figure 3 représente de façon schématique quatre séquences de signaux optiques émises respectivement par quatre balises 30₁, 30₂, 30₃, 30₄. On a fait figurer aussi sur la figure 3 des cycles de référence correspondants aux seuls instants d'émission des balises. Dans le cas de l'invention, la durée d'un cycle de référence est fixée à 5 millisecondes mais on pourra avantageusement prévoir une durée de cycle de référence plus courte ou plus longue.

Les balises émettrices 30₁, 30₂, 30₃, 30₄ sont synchronisées entre elles de façon que chacune émette une impulsion lumineuse seulement aux instants correspondant à un cycle de référence. Selon un mode de réalisation de l'invention, on prévoit un dispositif de synchronisation 20 relié à chacune desdites balises émettrices observées simultanément par une liaison filaire par exemple, le dispositif de synchronisation 20 engendrant le signal d'horloge de synchronisation des balises du type impulsionnel par exemple, illustré en figure 3. On pourra prévoir avantageusement qu'une des balises observées se conduise en maître par rapport aux autres balises de façon que cette balise maître remplace le dispositif de synchronisation 20. Dans le cas de l'utilisation d'un dispositif de synchronisation 20, chaque balise comporte un boîtier électronique (non représenté) permettant de commander le temps d'ouverture de son émetteur de lumière à chaque impulsion d'horloge délivrée par le dispositif de synchronisation 20 et correspondant à un cycle de référence.

Le boîtier électronique recevant les impulsions engendre un train d'impulsions lumineuses caractéristique par exemple du numéro d'identification d'une balise ou de tout autre paramètre servant à son identification. Ce type de dispositif de synchronisation est bien connu de l'homme de l'art et ne fera pas l'objet d'une description.

Comme visible sur la figure 3, selon un premier mode de réalisation de l'invention, les signaux optiques émis par les balises sont composés de séquences S1, S2, S3, S4 associées respectivement aux balises 30₁, 30₂, 30₃, 30₄, chaque séquence comprenant huit cycles de référence représentés par les impulsions référencées I1 à I8 de l'horloge de référence. le codage temporel des signaux optiques émis par les balises consiste à affecter à chaque séquence de signal S1 à S4, deux impulsions correspondant à deux cycles de référence. Par ailleurs, le temps séparant ces deux impulsions caractérise la balise émettrice du signal correspondant. Ainsi la balise 30₁ émet des impulsions lumineuses correspondant aux impulsions I1, I2. La balise 30₂ émet des impulsions lumineuses correspondant aux impulsions I5, I7. La balise 30₃ émet des impulsions lumineuses correspondant aux impulsions I3, I6 et la balise 30₄ émet des impulsions lumineuses correspondant aux impulsions I4, I8. On remarquera que selon cette répartition temporelle des impulsions I1 à I8, aucune des quatre balises émet simultanément une impulsion lumineuse.

Les huit cycles de référence constituent une période de temps d'observation élémentaire du dispositif d'observation 40. Pendant cette période de temps d'observation, les quatre balises émettent chacune une séquence d'impulsion lumineuse de codage les identifiant. On notera toutefois que la reconnaissance des codes des balises ne pourra être réalisée que s'il existe pendant la période de temps d'observation un repérage permettant d'identifier au moins une impulsion d'une balise par rapport aux autres impulsions. Ce repérage peut être obtenue simplement en supprimant une des quatre balises de sorte que le procédé de codage tel que décrit permettra valablement l'observation simultanée de trois balises dans une période de temps d'observation correspondant à huit cycles de référence. Bien entendu, on pourra prévoir une période de temps d'observation correspondant à sept cycles de référence en supprimant par exemple la balise 4 du groupe de balises observées. On a donné un exemple de procédé de codage pour trois ou quatre balises. Bien entendu on pourra avantageusement augmenter le nombre de balises observées simultanément en augmentant la période de temps d'observation.

Nous allons maintenant décrire le fonctionnement du dispositif d'observation 40 relativement au procédé de codage ci-dessus décrit.

Le dispositif d'observation 40 détecte au niveau de la cellule 41 une première impulsion lumineuse I1 émise par la balise 30₁. Le circuit de commande et de calcul 43 est relié à une première base de temps 60 comptant par cycle de référence de 5 millisecondes préalablement réglée en fonction de la durée des cycles de référence du dispositif de synchronisation 20. La base de temps 60 fournit au circuit de commande et de calcul 43 des tops d'horloge à chaque occurrence d'un cycle de référence. Le circuit de commande et de calcul 43 détecte l'impulsion I1 et positionne un élément d'information par exemple le premier élément binaire 101₁, à l'état 1 dans un mot de contrôle courant 100 placé dans la mémoire 60 de type mémoire vive par exemple. Le mot de contrôle courant 100 dans le cas d'un codage temporel sur une période de temps d'observation de huit cycles de référence, comporte également huit emplacements consécutifs formant un mot de huit éléments binaires. Après la mise à jour du mot de contrôle courant 100, le circuit de commande et de calcul 43 détermine les données angulaires mesurées alpha 1.1 correspondant à l'impulsion I1 et les mémoires dans une liste 110 de données angulaires placée par exemple dans la mémoire 60.

Après l'écoulement d'un cycle de référence à partir de l'instant d'émission de la première impulsion I1, la balise 30₁ émet une deuxième impulsion lumineuse I2 laquelle est détectée par le dispositif d'observation 40. Ce dernier calcule les données angulaires correspondantes et contrôle que l'occurrence de l'impulsion lumineuse reçue correspond à une occurrence d'un cycle de référence donnée par la base de temps 60 avec une tolérance prédéterminée. de cette manière, le dispositif d'observation 40 peut vérifier la cohérence des impulsions lumineuses détectées et dans ce cas, le circuit de commande et de calcul 43 mémorise les données angulaires alpha 1.2 mesurées dans un second emplacement de la liste 110 et positionne à 1 le second élément binaire 100₂ du mot de contrôle courant 100. Après écoulement d'un cycle de référence, la balise 30₃ émet une impulsion lumineuse I3 qui est détectée par le dispositif d'observation 40. Après calcul des données angulaires et vérification de la cohérence de l'occurrence de l'impulsion détectée, le circuit de commande et de calcul 43 mémorise les données angulaires alpha 1.3 dans le troisième emplacement de la liste 110 et positionne à 1 le troisième élément binaire 100₃ du mot de contrôle 100. Après écoulement d'un cycle de référence, le circuit de commande et de calcul 43 ne détecte aucune impulsion du fait que la balise 30₄ a été supprimée. Le circuit de commande et de calcul 43 n'ayant reçu aucune impulsion lumineuse correspondant au quatrième cycle de référence donné par la base de temps 60 initialise le quatrième emplacement de la liste des données angulaires 110 et positionne à zéro le quatrième élément binaire 100₄ du mot de contrôle courant 100. Après écoulement d'un cycle de référence suivant, le dispositif d'observation 40 détecte une impulsion I5 émis par la balise 30₂. Il met à jour la liste de données angulaires 110 et le mot de contrôle courant 100 de façon identique au cas précédemment décrit. Le traitement se poursuit de manière similaire jusqu'au huitième cycle de référence représenté par l'impulsion I8 pour obtenir un mot de contrôle courant 100 représenté en figure 5 dont le contenu est 0 1 1 1 0 1 1 1. La liste 110 de données angulaires contient la suite de données angulaires alpha 1.1, alpha 1.2, alpha 3.1,-, alpha 2.1, alpha 3.2, alpha 2.2, -. Dans cette liste 110, alpha représente les données angulaires mesurées et l'indice associé correspond au numéro de balise et au numéro de l'impulsion émise par la balise. Lorsque les données angulaires n'ont pas été mesurées lors de l'occurrence d'un cycle de référence, l'emplacement de la liste est laissé a un état d'initialisation représenté par le symbole -.

L'identification des balises émettrices et l'association avec les données angulaires mesurées leur correspondant est effectuée de la manière suivante. Le circuit de commande de calcul 43 procède à une recherche à l'identique du mot de contrôle courant 100 dans une table 150 de mots de contrôle préalablement enregistrés grâce à un programme de recherche adapté et facile à réaliser. La table de mots de contrôle 150 contient toutes les combinaisons binaires possibles 150₁, 150₂, 150₃... du mot de contrôle courant 100 correspondant à une répartition temporelle d'impulsion pour le codage des signaux lumineux émis par trois balises 30₁, 30₂, 30₃, comme visible en figure 6. Cette table de mots de contrôle 150 peut donc contenir dans le cas présent jusqu'à 256 mots de contrôle différents mais seulement huit de ceux-ci sont susceptibles de correspondre au mot de contrôle courant 100. On associe à la table de mots de contrôle 150 une table de mots d'identification de balises 250 préalablement enregistrées correspondante, chaque mot d'identification de balise 200₁, 200₂, 200₃... correspondant à un mot de contrôle 150₁, 150₂, 150₃... respectivement de la table de mots de contrôle 150.

On fait correspondre à un élément d'information d'un mot de contrôle 150ᵢ de la table de mots de contrôle 150 un numéro d'identification de balise du mot d'identification de balise 200 de la table de mots d'identification de balise 250. Ainsi lorsque le circuit de commande et de calcul 43 obtient le mot de contrôle 150ᵢ après recherche dans la table 150 identique au mot de contrôle courant 100 obtenu après une période de temps d'observation, il récupère dans la table 250, le mot d'identification de balise correspondant 200ᵢ en utilisant le même index de table comme cela est connu de l'homme de l'art. Ensuite le circuit de commande et de calcul 43, à partir du mot d'identification de balise 200ᵢ obtenu précédemment, associe à chaque élément du mot d'identification de balise 200 les données angulaires mesurées et mémorisées sous forme de liste 110 dans la mémoire 60, l'association se faisant par index identique du mot d'identification de balise 200 et de la liste des données angulaires 110.

En se reportant à la figure 5, on remarquera que le numéro d'identification de la balise 30₁ est 1 dans le mot d'identification de la balise 200, 2 pour la balise 30₂, 3 pour la balise 30₃. La valeur de l'index de l'emplacement du numéro d'identification de balise dans le mot 200 donne la valeur de l'index dans la liste 110 de sorte que le circuit de commande et de calcul 43 restituera à la fin de la période de temps d'observation les couples (1, alpha 1.1), (1, alpha 1.2), (3, alpha 3.1), (2, alpha 2.1), (3, alpha 3.2), (2, alpha 2.2).

La procédure décrite précédemment est renouvelée à chaque période d'observation mais l'on peut envisager aussi un rafraîchissement beaucoup plus rapide des données angulaires associées au numéro d'identification de balise. Pour ce faire, il suffit qu'à chaque cycle de référence, après une première période de temps d'observation, on décale vers la droite par rotation le mot de contrôle courant 100 de manière à positionner l'élément le plus extrême à gauche de ce mot de contrôle. On effectue alors la recherche dans la table des mots de contrôle 250 comme décrit précédemment de manière à obtenir à chaque cycle de référence de nouveaux couples (numéro d'identification de balise, données angulaires correspondantes). Ainsi on obtient un temps de rafraîchissement des données fournies par le dispositif d'observation selon la présente invention extrêmement rapide et équivalent au cycle de base d'émission des balises observées simultanément.

Selon un autre mode de réalisation de l'invention, le codage des signaux lumineux émis par les balises 30 est réalisé par répartition temporelle des impulsions à l'intérieur d'une séquence de codage S′1, S′2, S′3, S′4 correspondant à une période de temps d'observation, chaque séquence comprenant au moins deux impulsions de synchronisation I1, I2 dont l'écart temporel correspond à une premier cycle de référence d'une durée de 2,5 millisecondes par exemple et une impulsion de codage I4, I6, I8, I10 pour l'identification de la balise émettrice, l'écart temporel entre l'impulsion de codage et la dernière impulsion de synchronisation étant caractéristique de la balise, par exemple son numéro d'identification. En se référant à la figure 4, on a reporté les cycles de référence élémentaires représentés par les impulsions I1 à I10 donnés par le dispositif de synchronisation 20. L'écart temporel entre chaque cycle de référence fixé à 2,5 millisecondes pourra être d'une durée différente plus courte ou plus longue. Selon l'invention, l'impulsion de codage Iᵢ associée à une balise 30ᵢ est décalée temporellement de la seconde impulsion de synchronisation I2 d'une période de temps multiple du numéro d'identification i de la balise 30ᵢ considérée. Ainsi pour la balise 30₁, l'écart temporel entre la seconde impulsion de synchronisation I2 et l'impulsion de codage I4 est de 5 millisecondes s'exprimant par 1 x 2 x temps d'un cycle de référence où 1 représente le numéro de balise et 2 représente le nombre multiple fixé arbitrairement. On procède de manière identique pour les trois autres balises 30₂, 30₃, 30₄ comme visible en figure 4.

Les balises observées simultanément sont synchronisées entre elles de façon qu'à chaque période de temps d'observation elles émettent simultanément les deux impulsions de synchronisation I1, I2, les impulsions de codage I4, I6, I8, I10 étant émises à des instants différents respectivement par chacune des balises 30₁, 30₂, 30₃, 30₄. Bien entendu, on pourra facilement augmenter le nombre de balises observées simultanément ou réduire le nombre de cycles de référence de la période d'observation.

Nous allons maintenant décrire le fonctionnement du dispositif d'observation 40 relativement à ce procédé de codage. Les balises 30₁...30₄ émettent simultanément une première impulsion I1 qui est détectée au niveau du capteur 41. Le dispositif d'observation 40 préalablement configuré pour le codage décrit précédemment, initialise la première base de temps 60 fournissant au circuit de commande et de calcul des tops d'horloge toutes les 2,5 millisecondes. Le circuit de commande et de calcul 43 se met en attente de la deuxième impulsion de synchronisation devant survenir au cycle de référence suivant. A cet instant, les balises 30₁, 30₄ émettent une seconde impulsion lumineuse I2 qui est détectée par le dispositif d'observation. Comme décrit précédemment, le circuit de commande et de calcul 43 contrôle que l'occurrence de cette impulsion correspond à un cycle de référence ce qui permet de ne pas prendre en compte les impulsions lumineuses parasites. Si la seconde impulsion de synchronisation est détectée, le circuit de commande et de calcul 43 déclenche une seconde base de temps 70 comptant par cycle de référence double par exemple soit 5 millisecondes. Bien entendu il est évident que la seconde base de temps 70 peut être remplacée par la première base de temps 60 dès lors que le circuit de commande et de calcul prend en compte un top d'horloge sur deux de celle-ci grâce à un programme adapté facilement réalisable. L'impulsion lumineuse I4 est émise ensuite par la balise 30₁ après deux cycles de référence élémentaires de 2,5 millisecondes soit donc un cycle de référence de la base de temps 70. Par ailleurs, l'écart temporel exprimé en cycle de référence de la base de temps 70 entre la deuxième impulsion de synchronisation I2 et chacune des impulsions de codage I4, I6, I8, I10 associées respectivement à chacune des balises observées a été mémorisé préalablement dans la mémoire 80 reliée au circuit de commande et de calcul 43.

Lorsque le dispositif d'observation 40 détecte l'impulsion I4, le circuit de commande de calcul 43 détermine le nombre de comptage de cycle de référence de la base de temps 70. Dans le cas présent, ce nombre est 1. Le circuit de commande et de calcul 43 à partir du nombre de comptage obtenu l'identifie comme un numéro de balise correspondant à la balise 30₁, détermine les données angulaires correspondant à cette impulsion lumineuse et fournit le couple numéro d'identification de balise, données angulaires mesurées. Ce procédé de décodage est similaire pour les autres balises 30₂, 30₃, 30₄ et ne sera donc pas décrit. On recommence l'ensemble de la procédure ci-dessus décrite dès que la période de temps d'observation est écoulée au bout de dix cycles de référence élémentaires donnés par la première base de temps 60. Ce procédé de codage des signaux optiques des balises et de décodage des signaux par le dispositif d'observation présente l'avantage de permettre la reconnaissance de la balise dès la réception de l'impulsion de codage sans recherche préalable dans des tables de données préenregistrées.

Nous décrivons maintenant une variante du procédé d'évaluation des positions de balises dans lequel on utilise un mot de contrôle 100 et une liste 110 de données angulaires mesurées au cours d'une période de temps d'observation. Les données angulaires étant associées à un numéro de balise, le circuit de commande et de calcul 43 regroupe les données angulaires associées à une même balise sous forme de couples (alpha 1.1, alpha 1.2), (alpha 2.1, alpha 2.2), (alpha 3.1, alpha 3.2) pour comparer les éléments de chaque couple. Cette comparaison permettra de déterminer l'écart entre les valeurs des données angulaires mesurées pour une balise à des instants différents. Si l'écart est supérieur à une valeur d'écart prédéterminée, le circuit de commande et de calcul 43 considérera que ces données mesurées sont erronées, par exemple si alpha 1.1 diffère de alpha 1.2 d'une valeur d'écart supérieure à la valeur d'écart prédéterminée, les données angulaires correspondant à la balise 30₁ par exemple sont considérées comme non valides et la balise 30₁ est réputée invisible pour le dispositif d'observation jusqu'à la prochaine mesure de données angulaires. Cette comparaison sert ainsi de sécurité en plus du contrôle du temps séparant deux impulsions lumineuses détectées.

L'association deux à deux des données angulaires mesurées pendant une période de temps d'observation est utilisée en outre pour l'identification des balises émettrices dans le cas où on utilise simultanément les quatre balises 30₁, 30₂, 30₃, 30₄, chacune émettant deux impulsions de codage par exemple dans une séquence comprenant 8 cycles de référence. Dans ce cas l'identification des balises est réalisée en déterminant la distance "virtuelle" entre les données angulaires susceptibles d'appartenir à une même balise (données angulaires sensiblement identiques à un écart près). En établissant une correspondance distance virtuelle, numéro de balise émettrice, on peut attribuer aisément un couple de données angulaires à une référence de balise. Ainsi en se reportant à la figure 5, la distance entre alpha 1.1 et alpha 1.2 dans la table des données angulaires 110 est de 1 ce qui correspond à la balise 30₁. La distance entre alpha 2.1 et alpha 2.2 est de 2 ce qui correspond à la balise 30₂. On procède de même pour la balise 30₃ et la balise 30₄ qui n'est pas représentée. De cette manière on profite au maximum de l'espace temporel de la période de temps d'observation en utilisant simultanément quatre balises émettrices. On remarquera que ce procédé est compatible avec les procédés ci-dessus décrits.

Une autre variante du procédé d'évaluation de position de balise consiste à faire la moyenne de la valeur des données angulaires mesurées correspondant à une balise. Cette moyenne peut facilement être réalisée par le circuit de commande et de calcul 43 sous le contrôle d'un programme adapté. Après une période de temps d'observation, le circuit de commande et de calcul 43 associe à un numéro d'identification de balise une valeur moyenne de données angulaires correspondant à une position moyenne de la balise observée au cours de la période de temps d'observation.

L'invention trouve de nombreuses applications pour le positionnement d'un objet dans l'espace et l'analyse de son orientation. On peut à titre d'exemple placer sur l'objet trois balises 30 selon une disposition triangulaire et observer ces balises ainsi disposées par deux dispositifs d'observation 40 identiques. La disposition du système permet par un procédé de calcul par triangulation à partir des informations délivrées par chacun des circuits de commande et de calcul 43 de chaque dispositif d'observation, de déterminer les caractéristiques géométriques de l'implantation des balises sur l'objet, la position dans l'espace de l'objet et l'orientation de ses axes par rapport aux référentiels constitués par les axes optiques des deux dispositifs d'observation et leur plan de référence.

Selon une autre configuration, on place le dispositif d'observation 40 sur un objet mobile par rapport à un référentiel fixe représenté par un groupe de balises (3 ou 4 balises). Lorsque le dispositif d'observation détecte dans son champ de visée un groupe de trois balises synchrones, il calcule la position de chacune d'elles par rapport à son axe d'observation, puis les angles interbalises comme cela est connu de l'homme de l'art. Il en déduit alors en connaissant la distance séparant deux balises, sa position dans le plan par rapport à ces balises et son orientation sur lui-même dans ce plan.

L'utilisation d'une quatrième balise permet de calculer la position de l'objet mobile dans le plan et son orientation selon l'axe normal au plan.

L'utilisation de balises supplémentaires permet d'accéder aux autres paramètres de la localisation de l'objet et de son orientation dans l'espace.

On peut donc prévoir de nombreuses utilisations intéressantes et nouvelles pour le positionnement de robots mobiles ou d'engins mobiles par rapport à un référentiel fixe.

A titre d'exemple, l'utilisation de plusieurs groupes de balises synchrones permet à un engin mobile de se positionner au cours de ses évolutions par rapport au groupe de balises le plus proche qu'il peut rencontrer.

Bien entendu, l'invention n'est pas limitée à l'exemple de réalisation ci-dessus décrit, pour lequel on pourra prévoir d'autres variantes de réalisation sans pour cela sortir du cadre de l'invention.

## Revendications

1. Procédé d'évaluation des positions relatives d'une pluralité de balises dans un système de localisation de balises comprenant des balises codées (30) émettant des impulsions lumineuses et un dispositif d'observation (40,42,43) pour détecter une impulsion lumineuse d'une balise et fournir des données angulaires de position de la balise par rapport au dispositif d'observation en réponse à ladite détection, caractérisé en ce qu'il comprend les étapes suivantes:
on fixe une période d'observation des balises comprenant un nombre prédéterminé de cycles de détection d'une impulsion lumineuse par le dispositif d'observation;
on synchronise les balises entre elles pour qu'elles émettent à tour de rôle, pendant la période d'observation, au moins deux impulsions lumineuses sur deux cycles de détection, de ladite periode d'observation en fonction d'une répartition temporelle préétablie des instants d'émission des impulsions lumineuses affectés à chaque balise;
on mémorise dans le dispositif d'observation ladite répartition temporelle pour associer à un cycle de détection une référence de balise particulière;
on initialise dans le dispositif d'observation une première base de temps (60) comptant par cycle de détection à partir d'une première impulsion lumineuse détectée pour détecter l'occurrence des impulsions lumineuses pendant la période d'observation;
on mémorise à chaque impulsion détectée pendant la période d'observation, les données angulaires de la balise correspondant à ladite impulsion lumineuse par rapport au dispositif d'observation;
on affecte aux données angulaires mémorisées la référence de la balise particulière correspondant à ces données en associant l'ordre des occurrences d'impulsions lumineuses détectées et ladite répartition temporelle mémorisée pour évaluer, pendant la période d'observation, la position des balises observées simultanément dans le champ d'observation du dispositif d'observation.

2. Procédé selon la revendication 1, dans lequel la répartition temporelle des instants d'émission d'une impulsion lumineuse est établie en attribuant à chaque balise particulière deux cycles de détection pendant la période d'observation, séparés l'un de l'autre d'un nombre de cycles de détectection fonction de la référence de la balise à laquelle ils sont atribués, les cycles de détection attribués aux balises observées simultanément ne se recouvrant pas temporellement pendant la période d'observation, et en réservant dans ladite période d'observation au moins un cycle de détection en tant que repère pendant lequel aucune balise n'émet une impulsion lumineuse.

3. Procédé selon la revendication 1, dans lequel la répartition temporelle des instants d'émission d'une impulsion lumineuse est établie en attribuant à chaque balise particulière trois cycles de détection pendant la période d'observation, deux premiers cycles de détection en début de la période d'observation étant réservés à des impulsions lumineuses de synchronisation émises simultanément par toutes les balises observées, et le troisième cycle de détection attribué à une balise particulière étant décalé temporellement des deux premiers cycles de détection d'un nombre de cycles de détection proportionnel à un numéro d'identification de la balise particulière.

4. Procédé selon la revendication 2, dans lequel l'étape de mémorisation des données angulaires comprend en outre
une étape de positionnement d'un élément d'information dans un emplacement d'un mot de contrôle courant (100) comportant un nombre prédéterminé d'emplacement, en parallèle à la mémorisation des données angulaires dans une liste ordonnée de données angulaires, la position de l'emplacement dans le mot de contrôle courant étant donnée par un nombre de comptage de cycle de détection fourni par la première base de temps;
et dans lequel ladite affectation des données angulaires mémorisées aux références des balises particulières comprend
une étape de recherche à l'identique du mot de contrôle courant dans une table (150) de mots de contrôle préenregistrés associée par indexation à une table (250) de mots d'identification des balises pour fournir un mot d'identification (200) particulier, chaque mot d'identification (200) comportant une succession de références de balises fonction de l'état du mot de contrôle préenregistré qui lui correspond;
une étape d'association du mot d'identification (200) particulier et des données angulaires mémorisées dans la liste de données angulaires.

5. Procédé selon la revendication 4, dans lequel le mot de contrôle courant (100) est mis à jour à chaque cycle de détection après une première période d'observation.

6. Procédé selon la revendication 3, dans lequel l'étape de mémorisation des données angulaires comprend en outre :
une étape d'initialisation d'une seconde base de temps (70) comptant par multiple de cycle de détection en réponse à la détection d'une seconde impulsion lumineuse de synchronisation;
une étape de comptage des cycles de détection compris entre l'occurrence de la détection de la seconde impulsion de synchronisation et l'occurrence de la détection d'une impulsion lumineuse suivante pour fournir un nombre de comptage, en parallèle à la mémorisation des données angulaires
et dans lequel ladite affectation des données angulaires mémorisées aux références des balises particulières comprend
une étape d'association du nombre de comptage en tant que référence d'une balise particulière aux données angulaires mémorisées correspondant audit nombre de comptage.

7. Procédé selon la revendication 2, dans lequel
on compare deux à deux les données angulaires mémorisées pendant la période d'observation pour les regrouper par paire de données angulaires sensiblement identiques;
pour chaque paire de données angulaires on détermine un nombre de cycle de détection compris entre l'occurrence des impulsions lumineuses détectées correspondant auxdites données angulaires de la paire de données angulaires;
on affecte la paire de données angulaires à la balise dont la référence correspond au nombre de cycles de détection déterminé à l'étape précédente.

## Patentansprüche

1. Verfahren zur Auswertung der relativen Positionen einer Vielzahl von Baken in einem Bakenlokalisierungssystem, das kodierte Baken (30), die Lichtimpulse aussenden, und eine Beobachtungsvorrichtung (40, 42, 43) zur Erfassung eines Lichtimpulses einer Bake und zum Liefern von Positionswinkeldaten der Bake bezüglich der Beobachtungsvorrichtung in Antwort auf die Erfassung aufweist, dadurch gekennzeichnet, das es die folgenden Stufen aufweist:
man legt einen Zeitraum zur Beobachtung der Baken fest, der eine vorbestimmte Anzahl von Zyklen der Erfassung eines Lichtimpulses durch die Beobachtungsvorrichtung aufweist;
man synchronisiert die Baken untereinander, damit sie während des Beobachtungszeitraums der Reihe nach wenigstens zwei Lichtimpulse auf zwei Erfassungszyklen des Beobachtungszeitraums aussenden, in Abhängigkeit von einer zuvor bestimmten Zeitverteilung der einer jeden Bake zugeordneten Aussendemomente der Lichtimpulse;
man speichert in der Beobachtungsvorrichtung die Zeitverteilung, um einem Erfassungszyklus ein besonderes Bakenbezugszeichen zuzuordnen;
man initialisiert in der Beobachtungsvorrichtung eine erste Zeitbasis (60), die pro Erfassungszyklus von einem ersten erfaßten Lichtimpuls an zählt, um das Auftreten der Lichtimpulse während des Beobachtungszeitraums zu erfassen;
man speichert zu jedem während des Beobachtungszeitraums erfaßten Impuls die Winkeldaten der Bake entsprechend dem Lichtimpuls bezüglich der Beobachtungsvorrichtung;
man ordnet den gespeicherten Winkeldaten das Bezugszeichen der besonderen Bake entsprechend diesen Daten zu, indem man die Reihenfolge der erfaßten auftretenden Lichtimpulse und die gespeicherte Zeitverteilung verbindet, um während des Beobachtungszeitraums die Position der in dem Beobachtungsfeld der Beobachtungsvorrichtung simultan beobachteten Baken auszuwerten.

2. Verfahren gemäß Anspruch 1, bei dem die Zeitverteilung der Aussendemomente eines Lichtimpulses festgelegt wird, indem man jeder besonderen Bake zwei Erfassungszyklen während des Beobachtungszeitraums zuordnet, die voneinander durch eine Anzahl von Erfassungszyklen abhängig von dem Bezugszeichen der Bake, der sie zugeordnet sind, getrennt sind, wobei sich die den simultan beobachteten Baken zugeordneten Erfassungszyklen während des Beobachtungszeitraums zeitlich nicht überschneiden, und wobei in dem Beobachtungszeitraum wenigstens ein Erfassungszyklus als Festmarkierung reserviert wird, während der keine Bake einen Lichtimpuls aussendet.

3. Verfahren gemäß Anspruch 1, bei dem die Zeitverteilung der Aussendemomente eines Lichtimpulses festgelegt wird, indem man jeder besonderen Bake während des Beobachtungszeitraums drei Erfassungszyklen zuordnet, wobei zwei erste Erfassungszyklen zu Beginn des Beobachtungszeitraums den von allen beobachteten Baken simultan ausgesandten Synchronisierungs-Lichtimpulsen vorbehalten sind, und der dritte einer besonderen Bake zugeordnete Erfassungszyklus zeitlich von den zwei ersten Erfassungszyklen versetzt ist um eine Anzahl von Erfassungszyklen, die proportional zu einer Indifikationsnummer der besonderen Bake ist.

4. Verfahren gemäß Anspruch 2, bei dem die Speicherphase der Winkeldaten außerdem aufweist :
eine Stufe der Positionierung eines Informationselementes in einen Speicherplatz eines laufenden Kontrollcodes (100), der eine vorbestimmte Anzahl von Speicherplätzen aufweist, parallel zur Speicherung der Winkeldaten in einer geordneten Liste der Winkeldaten, wobei die Position des Speicherplatzes in dem laufenden Kontrollcode von einer von der ersten Zeitbasis gelieferten Zählnummer des Erfassungszyklus gegeben ist;
und bei dem die Zuordnung der gespeicherten Winkeldaten zu den Bezugszeichen der besonderen Baken umfaßt :
eine Stufe der Suche nach dem identischen Code mit dem laufenden Kontrollcode in einem Raster (150) aus vorgespeicherten Kontrollcodes, das durch Indizierung mit einem Raster (250) aus Identifikationscodes der Baken verbunden ist, um einen besonderen Identifikationscode (200) zu liefern, wobei jeder Identifikationscode (200) eine Folge von Baken-Bezugszeichen aufweist, abhängig von dem Status des vorgespeicherten Kontrollcodes, das ihm entspricht;
eine Stufe zur Verbindung des besonderen Identifikationscodes (200) und der in der Liste der Winkeldaten gespeicherten Winkeldaten.

5. Verfahren gemäß Anspruch 4, bei dem der laufende Kontrollcode (100) bei jedem Erfassungszyklus nach einem ersten Beobachtungszeitraum aktualisiert wird.

6. Verfahren gemäß Anspruch 3, bei dem die Speicherphase der Winkeldaten außerdem aufweist :
eine Stufe zur Initialisierung einer zweiten Zeitbasis (70), die nach einem Vielfachen des Erfassungszyklus zählt in Antwort auf die Erfassung eines zweiten Synchronisierungs-Lichtimpuls;
eine Stufe zur Zählung der Erfassungszyklen zwischen der auftretenden Erfassung des zweiten Synchronisierungs-Impuls und der auftretenden Erfassung eines folgenden Lichtimpuls, um eine Zählnummer parallel zur Speicherung der Winkeldaten zu liefern
und bei dem die Zuordnung der gespeicherten Winkeldaten zu den Bezugszeichen der besonderen Baken
eine Stufe der Verbindung der Zählnummer als Bezugszeichen einer besonderen Bake mit den gespeicherten Winkeldaten entsprechend der Zählnummer
umfaßt.

7. Verfahren gemäß Anspruch 2, bei dem
man die während des Beobachtungszeitraums gespeicherten Winkeldaten zwei zu zwei vergleicht, um sie als Paare von praktisch identischen Winkeldaten neu zu gruppieren;
man für jedes Paar Winkeldaten eine Anzahl von Erfassungszyklen zwischen dem Auftreten der erfaßten Lichtimpulse entsprechend den Winkeldaten des Winkeldatenpaars festlegt;
man das Winkeldatenpaar der Bake zuordnet, deren Bezugszeichen der in der vorherigen Stufe festgelegten Anzahl der Erfassungszyklen entspricht.

## Claims

1. Method for determining the relative positions of a plurality of beacons in a beacon location system comprising coded beacons (30) emitting light pulses and an observation device (40, 42, 43) for detecting a light pulse from a beacon and supplying angular data on the position of the beacon with respect to the observation device in response to the said detection, characterised in that it comprises the following steps:
a period of observation of the beacons is fixed, comprising a predetermined number of cycles of detection of a light pulse by the observation device;
the beacons are synchronised with each other so that they emit in turn, during the observation period, at least two light pulses over two detection cycles of the said period of observation, in accordance with a pre-established time distribution of the light pulse emission times allocated to each beacon;
the said time distribution is stored in the observation device, in order to associate a particular beacon reference with a detection cycle;
in the observation device, a first time base (60) is initialised, counting by detection cycle as from a first light pulse detected in order to detect the occurrence of the light pulses during the period of observation;
at each pulse detected during the observation period, the angular data of the beacon corresponding to the said light pulse with respect to the observation device are stored;
the reference of the particular beacon corresponding to these data is allocated to the angular data stored by associating the order of the occurrences of light pulses detected and the said time distribution stored in order to determine, during the period of observation, the position of the beacons observed simultaneously in the field of observation of the observation device.

2. Method according to Claim 1, in which the time distribution of the time of emission of a light pulse is established by allocating to each particular beacon two detection cycles during the period of observation, separated from each other by a number of detection cycles which is a function of the reference of the beacon to which they are allocated, the detection cycles allocated to the beacons observed simultaneously not overlapping in time during the period of observation, and by reserving, in the said period of observation, at least one detection cycle as a reference during which no beacon emits a light pulse.

3. Method according to Claim 1, in which the time distribution of the time of emission of a light pulse is established by allocating to each particular beacon three detection cycles during the period of observation, two first detection cycles at the start of the period of observation being reserved for synchronisation light pulses emitted simultaneously by all the beacons observed, and the third detection cycle allocated to a particular beacon being offset in time from the first two detection cycles by a number of detection cycles proportional to an identification number of the particular beacons.

4. Method according to Claim 2, in which the step consisting of the storing of the angular data also comprises
a step in which a data element is positioned in a location in a current check word (100) having a predetermined location number, in parallel with the storing of the angular data in an ordered list of angular data, the position of the location in the current check word being given by a detection cycle counting number supplied by the first time base;
and in which the said allocation of the angular data stored to the references on the particular beacons comprises a step consisting of seeking the identical word to the current check word in a table (150) of prerecorded check words associated by indexing with a table (250) of beacon identification words in order to supply a particular identification word (200), each identification word (200) having a succession of beacon references which are a function of the state of the prerecorded check word corresponding thereto;
a step consisting of the association of the particular identification word (200) and the angular data stored in the list of angular data.

5. Method according to Claim 4, in which the current check word (100) is updated at each detection cycle after a first period of observation.

6. Method according to Claim 3, in which the step consisting of the storing of the angular data also comprises:
a step consisting of the initialisation of a second time base (70) counting in multiples of detection cycles in response to the detection of a second synchronisation light pulse;
a step consisting of the counting of the detection cycles between the occurrence of the detection of the second synchronisation pulse and occurrence of the detection of a subsequent light pulse in order to supply a counting number, in parallel with the storing of the angular data
and in which the said allocation of the angular data stored to the references of the particular beacons comprises
a step consisting of the association of the counting number as a reference of a particular beacon with the stored angular data corresponding to the said counting number.

7. Method according to Claim 2, in which
the angular data items stored during the period of observation are compared in pairs in order to group them in pairs of substantially identical angular data items;
for each pair of angular data items, there is determined a number for a detection cycle included between the occurrence of the detected light pulses corresponding to the said angular data items of the pair of angular data items;
the pair of angular data items is allocated to the beacon whose reference corresponds to the number of detection cycles determined during the previous step.
